# EUROPÄISCHE PATENTSCHRIFT

(11) **EP 2 321 166 B1**
(45) Veröffentlichungstag und Bekanntmachung des Hinweises auf die Patenterteilung: **22.10.2014**
(21) Anmeldenummer: 09782499.9
(22) Anmeldetag: 02.09.2009
(51) Int. Cl.: B60W 30/20, F16D 48/06

(54) **VORRICHTUNG UND VERFAHREN ZUM ERKENNEN UND REDUZIEREN EINER STÖRSCHWINGUNG BEI EINEM FAHRZEUG**
DEVICE AND METHOD FOR THE DETECTION AND REDUCTION OF A DISTURBING VIBRATION IN A VEHICLE
DISPOSITIF ET PROCÉDÉ DE DÉTECTION ET DE RÉDUCTION D'UNE VIBRATION PARASITE SUR UN VÉHICULE À MOTEUR

(30) Priorität: 09.09.2008 DE 102008041884
(43) Veröffentlichungstag der Anmeldung: 18.05.2011
(73) Patentinhaber: ZF Friedrichshafen AG, 88038 Friedrichshafen (DE)
(72) Erfinder: WANNAGS, Markus, 73441 Bopfingen (DE); INGENBLEEK, Robert, 88079 Kressbronn (DE); BAUER, Gunther, 88069 Tettnang (DE)
(86) Internationale Anmeldenummer: PCT/EP2009/061325
(87) Internationale Veröffentlichungsnummer: WO 2010/028990

(56) Entgegenhaltungen:
- EP-A1- 1 566 561
- EP-A2- 1 097 834
- WO-A1-2004/027285
- DE-A1- 10 244 026

## Beschreibung

Die vorliegende Erfindung betrifft eine Vorrichtung und ein Verfahren zum Erkennen und Reduzieren einer Störschwingung, insbesondere einer Rupfschwingung, an einer Kupplung oder einer Bremse eines Antriebsstranges eines Fahrzeuges, wie bekannt aus WO 2004/027285 A.

Aus der Fahrzeugtechnik ist es bekannt, dass reibkontaktinduzierte Schwingungen bei Kupplungen oder Bremsen in Antriebsträngen häufig auftreten. Insbesondere werden diese Schwingungen bei schfupfenden Kupplungen erzeugt. Ursachen hierfür sind durch das Reibungssystem selbsterregte Reibschwingungen. Außerdem kann es durch Toleranzen im Kupplungssystem aufgrund von geometrischen Abweichungen zu einer zusätzlichen Schwingungsanregung kommen. Die so auftretenden Schwingungen sind unerwünscht, da sie für die Bauteile eine zusätzliche Belastung bedeuten, technische Prozesse empfindlich stören und den Fahrkomfort deutlich verringern. In der Kraftfahrzeugtechnik sind die oben beschriebenen Anregungsphänomene als Rupfschwingungen bekannt.

Um Rupfschwingungen zu verhindern, ist ein Steuerverfahren bekannt, bei dem das Rupfen gemessen und eine Korrektur berechnet wird. Dazu wird die Rupfschwingung zunächst eine Halbperiode lang erfasst und dann entsprechend gegengesteuert. Als Gegensteuerung wird ein Korrekturmoment berechnet. Eine kontinuierliche Regelung ist dabei aufgrund der Dynamik des Stellsystems der Kupplung nicht möglich. Ein weiterer Nachteil bei der bekannten Steuerung liegt darin, dass die Berechnung einer rupffreien, idealen Drehzahl unbedingt erforderlich ist.

Aus der DE 102 44 026 A1 ist eine Vorrichtung und ein Verfahren zur aktiven Reduzierung von Kupplungsrupfen bekannt bei dem mittels einer Stellvorrichtung auf eine Kupplung derart eingewirkt wird, dass eine störende Drehschwingung der Kupplung gedämpft wird.

Aufgabe der Erfindung ist es, eine verbesserte Vorrichtung und ein Verbessertes Verfahren zum Erkennen und Reduzieren einer Störschwingung, insbesondere einer Rupfschwingung, an einer Kupplung oder einer Bremse eines Antriebsstranges eines Fahrzeuges bereitzustellen.

Diese Aufgabe wird durch eine Vorrichtung gemäß dem 1. Patentanspruch und durch ein Verfahren gemäß dem 4. Patentanspruch gelöst. Weitere vorteilhafte Ausgestaltungen der Erfindung sind in den Unteransprüchen und den Zeichnungen ausgeführt.

Die Vorrichtung bestehend hierbei zumindest aus einer Betätigungsvorrichtung zur Betätigung der Bremse oder der Kupplung, einer Sensorvorrichtung zur Erfassung einer Drehzahldifferenz zwischen einer Eingangs- und Ausgangsdrehzahl der Bremse oder Kupplung und zur Erfassung einer Ausgangsgröße des Antriebsstranges, durch welche die Störschwingung erkennbar ist, einem an die Ausgangsgröße des Antriebsstranges adaptierbaren Filter, mittels welchem ein Gegensteuersignal generierbar ist, einer mit dem Filter verbundenen Getriebesteuerung zur Regelung oder Steuerung der Betätigungsvorrichtung, wobei mittels der Getriebesteuerung eine Eingangsgröße des Antriebsstranges für die Betätigung der Bremse oder Kupplung mit dem Gegensteuer&signal zur Reduzierung der Störschwingung überlagerbar ist.

Erfindungsgemäß umfasst die Vorrichtung einen Signalgenerator, der mit der Sensorvorrichtung und dem Filter verbunden ist, wobei mittels des Signalgenerators ein periodisches erstes Ausgangssignal generierbar ist, welches von der Drehzahldifferenz zwischen der Eingangs- und Ausgangsdrehzahl der Bremse oder Kupplung abhängig ist und ein periodisches zweites Ausgangssignal generierbar ist, welches von der Drehzahldifferenz zwischen der Eingangs- und Ausgangsdrehzahl der Bremse oder Kupplung abhängig ist und welches gegenüber dem ersten Ausgangssignal phasenverschoben ist, wobei durch den Filter zumindest mittels des ersten und zweiten Ausgangssignals und mittels der Ausgangsgröße das Gegensteuersignal generierbar ist.

Dies erlaubt eine sehr genauer Bestimmung und Generierung des zur Reduzierung der Störschwingung benötigten Gegensteuersignals, wodurch die Störschwingung zumindest zum größten Teil abgeschwächt oder zur Gänze kompensiert werden kann.

Die Betätigungsvorrichtung kann insbesondere eine hydraulische, eine pneumatische oder eine elektromechanische Vorrichtung sein über welche die Getriebesteuerung die Bremse oder Kupplung betätigen kann, beispielsweise umfasst die Betätigungsvorrichtung Steuer- oder Regelventile und ein hydraulischer oder pneumatischer Aktuator oder eine elektronische Steuerung oder Regelung und ein elektromechanischer Aktuator. Eine pneumatische oder hydraulische Betätigungsvorrichtung wird bevorzugt dann eingesetzt, wenn in dem Fahrzeug eine Hydraulik oder Pneumatik auch für andere Zwecke verwendbar ist und eine elektromechanische Betätigungsvorrichtung wird bevorzugt dann eingesetzt, wenn das Fahrzeug elektrisch antreibbar ist, beispielsweise ein reines Elektrofahrzeug oder ein Hybridfahrzeug.

Die Sensorvorrichtung besteht bevorzugt aus einer Sensoreinheit, die entweder, falls die Vorrichtung über eine Kupplung verfügt, einen Drehzahlsensor an einem Eingangselement der Kupplung, zur Erfassung deren Eingangsdrehzahl, und einen Drehzahlsensor an einem Ausgangselement der Kupplung, zur Erfassung deren Ausgangsdrehzahl umfasst oder, falls die Vorrichtung über eine Bremse verfügt, einen Drehzahlsensor an einem Eingangselement der Bremse, zur Erfassung deren Eingangsdrehzahl umfasst. Da ein Ausgangselement der Bremse gegenüber dem Eingangselement immer stillsteht, das heißt die Ausgangsdrehzahl immer null ist, ist in diesem Fall kein zweiter Drehzahlsensor zur Ermittlung der Ausgangsdrehzahl nofinrendig.

Über diese eine Sensoreinheit kann nun sowohl die Drehzahldifferenz an der Kupplung oder der Bremse bestimmt werden, als auch die Störschwingung, indem das Sensorsignal an dem Eingangselement der Bremse beziehungsweise dem Ausgangselement der Kupplung als Ausgangsgröße des Antriebsstranges verwendet und ausgewertet wird. Eine zweite Sensoreinheit ist hierbei nicht erforderlich, wodurch alle für die erfindungsgemäße Vorrichtung und Verfahren benötigten Antriebsstranginformationen von einem beziehungsweise zwei Drehzahlsensoren beziehbar sind, wodurch die Vorrichtung sehr kostengünstig ist.

In einer alternativen Ausgestaltung der Erfindung besteht die Sensorvorrichtung zumindest aus einer ersten Sensoreinheit und einer zweiten Sensoreinheit, wobei über die erste Sensoreinheit die Drehzahldifferenz zwischen der Eingangs- und Ausgangsdrehzahl der Bremse oder der Kupplung ermittelbar ist und über die zweite Sensoreinheit die Ausgangsgröße des Antriebsstranges ermittelbar ist. Diese zweite Sensoreinheit kann insbesondere über einen Beschleunigungssensor in Längsrichtung des Fahrzeugs oder einen Drehzahlsensor an einem Rad oder einem anderem Teil des Antriebsstranges des Fahrzeugs verfügen.

Vorrichtung nach Anspruch 1, dadurch gekennzeichnet, dass die Sensorvorrichtung aus zumindest einer ersten Sensoreinheit und einer zweiten Sensoreinheit besteht, wobei über die erste Sensoreinheit die Drehzahldifferenz (Δn₁, Δn₂) zwischen der Eingangs- und Ausgangsdrehzahl (n₁, n₂, nₘₒₜ) der Bremse oder Kupplung (9) ermittelbar ist und über die zweite Sensoreinheit die Ausgangsgröße (xₐ) des Antriebsstranges ermittelbar ist.

Der an die Ausgangsgröße des Antriebsstranges adaptierbare Filter ist besonders bevorzugt ein adaptiver Notch-Filter, der insbesondere über einen Least-Mean-Square-Algorithmus oder einen Recursive-Least-Square-Algorithmus zur Adaption des Filters an die Ausgangsgröße verfügt. Ein adaptiver Notch-Filter zeichnet sich durch eine geringe Anzahl an Filterkoeffizienten aus und eignet sich daher besonders für Anwendungen im Fahrzeugbereich, wo wenig Rechenleistung zur Verfügung steht.

Bei dem erfindungsgemäßen Verfahren mit einer der vorgenannten Vorrichtungen zum Erkennen und Reduzieren einer Störschwingung an einer Bremse oder Kupplung eines Antriebsstranges eines Fahrzeuges, erfasst ein Signalgenerator über eine Sensorvorrichtung eine Drehzahldifferenz zwischen einer Eingangs- und Ausgangsdrehzahl der Bremse oder Kupplung. Der Signalgenerator generiert ein periodisches erstes Ausgangssignal, welches von der Drehzahldifferenz zwischen der Eingangs- und Ausgangsdrehzahl der Bremse oder Kupplung abhängig ist und ein periodisches zweites Ausgangssignal, welches von der Drehzahldifferenz zwischen der Eingangs- und Ausgangsdrehzahl der Bremse oder Kupplung abhängig ist und welches gegenüber dem ersten Ausgangssignal phasenverschoben ist. Dabei wird über die Sensorvorrichtung ein von einer Ausgangsgröße des Antriebsstranges abhängiges Sensorsignal ermittelt, und ein an die Ausgangsgröße adaptierbarer Filter generiert aus dem ersten und zweiten Ausgangssignal und dem Sensorsignal ein Gegensteuersignal. Schließlich überlagert eine Getriebesteuerung zur Regelung oder Steuerung einer Betätigungsvorrichtung der Bremse oder Kupplung eine Eingangsgröße des Antriebsstranges mit dem Gegensteuersignal.

Auf diese Weise wird ein Verfahren zum Erkennen und Reduzieren einer Störschwingung beispielsweise bei Getriebekupplungen oder -bremse angegeben, mit dem eine kontinuierliche Steuerung bzw. Abschwächung oder gar Kompensation ermöglicht wird, um das Auftreten von Rupfschwingungen zu verhindern. Dazu wird zunächst das Sensorsignal als mit den Rupfschwingungen überlagerte Ausgangsgröße erfasst. Mithilfe einer geeigneten Auswertung kann dann ein entsprechendes Gegensteuersignal berechnet werden, um die Schwingungen kontinuierlich abzuschwächen oder zu kompensieren.

Vorzugsweise kann das ermittelte Gegensteuersignal dem eigentlichen Ansteuersignal zur Kupplungs- und /oder Bremsbetätigung als Eingangsgröße des Antriebsstranges überlagert werden.

Zur Verbesserung der Güte der Reduzierung der Störschwingung generiert der Signalgenerator das zweite Ausgangssignal derart, dass eine Phasenlage des zweiten Ausgangssignals in Abhängigkeit eines zwischen der Getriebesteuerung und der Bremse oder der Kupplung auftretenden Phasenverzugs und in Abhängigkeit einer Frequenz des ersten Ausgangssignals gegenüber der Phasenlage des ersten Ausgangssignals verschoben ist. Besonders bevorzugt wird der zwischen der Getriebesteuerung und der Bremse oder Kupplung auftretende Phasenverzug bei einer Fahrzeuginbetriebnahme ermittelt und in dem Fahrzeug, insbesondere dem Signalgenerator, hinterlegt, wodurch eine aufwändige Erkennung des Phasenverzugs währen dem Betrieb des Fahrzeugs entfallen kann. Die Fahrzeuginbetriebnahme bei dem der Phasenverzug ermittelt wird liegt bevorzugt im Bereich eines Endes der Fahrzeugherstellung, wodurch bei einem späteren Fahrzeugstart keine Startverzögerung durch die Ermittlung des Phasenverzugs entsteht. Der Signalgenerator generiert das zweite Ausgangssignal dann in Abhängigkeit des hinterlegten Phasenverzugs und in Abhängigkeit der Frequenz des ersten Ausgangssignals.

Der zwischen der Getriebesteuerung und der Bremse oder der Kupplung herrschende Phasenverzug entsteht insbesondere durch die Trägheit der zwischengeschalteten Bauteile, insbesondere der Betätigungsvorrichtung der Bremse oder Kupplung und bewirkt, dass ein von dem Steuergerät ausgesandter Befehl zum Öffnen oder Schließen der Kupplung oder Bremse erst nach einer dem Phasenverzug entsprechenden Zeitspanne zu einer mechanischen Öffnungs- oder Schließbewegung der Kupplung oder Bremse führt.

Im Rahmen der vorgeschlagenen Vorrichtung beziehungsweise dem vorgeschlagenen Verfahren kann bei der Auswertung der erfassten Sensorsignale die Frequenz, die Amplitude, Phasenlage oder dergleichen des jeweiligen Sensorsignals bestimmt werden. Aus diesen Informationen kann dann basierend auf den Kenntnissen des dynamischen Verhaltens der Übertragungsstrecke ein entsprechendes Gegensteuersignal als Stellgröße berechnet werden. Das Gegensteuersignal kann einerseits dem eigentlichen Ansteuersignal der Übertragungsstrecke überlagert werden und andererseits als Eingangsgröße einem Streckenmodell zugeführt werden, welches ein mathematisches Modell der realen Übertragungsstrecke darstellt. Das Streckenmodell kann eine virtuelle Systemantwort der Übertragungsstrecke berechnen. Mithilfe dieser virtuellen Streckenantwort und dem als Ausgangsgröße der Übertragungsstrecke erfassten Sensorsignal ist es wiederum möglich das Ansteuersignal zu berechnen. Beispielsweise können die Amplitude sowie die Frequenz der Schwingungen aus der Überlagerung von Sensorsignal und dem virtuellen Streckenausgang bestimmt werden.

Gemäß einer möglichen Weiterbildung kann vorgesehen sein, dass zur Verbesserung der Detektionsgüte die Ausgangsgröße des Streckenmodells über einen Filter zum Beispiel einen Kalmann-Filter mit dem Sensorsignal abgeglichen wird. Bei dem dargestellten Gegensteueralgorithmus ist ersichtlich, dass das Gegensteuersignal zusätzlich noch auf ein mathematisches Modell beziehungsweise Streckenmodell der Übertragungsstrecke wirkt. Dadurch wird das theoretische Verhalten der Strecke bei der Gegensteuerung berücksichtigt. Mit dem Ausgang des Streckenmodells beziehungsweise dem Antwortsignal und der gemessenen Drehzahl beziehungsweise dem erfassten Sensorsignal kann das eigentliche Ansteuersignal extrahiert werden.

Im Gegensatz zu bekannten Verfahren ist weder die Berechnung einer schwingungsfreien, idealen Drehzahl noch die Berechnung eines Korrekturmoments erforderlich, da das erfindungsgemäße Verfahren direkt zum Beispiel bei einer hydraulischen oder pneumatischen Ansteuerung der Kupplung auf den Solldruck eingreift. Ferner kann bei dem erfindungsgemäß vorgeschlagenen Verfahren eine kontinuierliche Ermittlung eines Gegensteuersignals realisiert werden.

Ein weiterer Vorteil des dargestellten Verfahrens ergibt sich dadurch, dass die Rupfschwingungen über einen Modell basierten Ansatz aus dem Sensorsignal und einer im Modell berechneten Antwort auf das Gegensteuersignal ermittelt werden.

Zusätzlich bietet das erfindungsgemäße Verfahren die Möglichkeit zwischen einer real vorhandenen Störung und einer die Gegensteuerung erzeugten Schwingungen zu unterscheiden. Dadurch kann ein instabiles Aufschwingen mit dem erfindungsgemäßen Verfahren vermieden werden.

Darüber hinaus kann durch die kontinuierliche Gegensteuerung im Gegensatz zu dem bekannten Verfahren, welches auf der Gegensteuerung lediglich einer Halbperiode basiert, eine sprungförmige Anregung der Übertragungsstrecke vermieden werden.

Bevorzugt wird das Gegensteuersignal und das erste und zweite Ausgangssignal nur während eines Schließvorgangs der Bremse oder Kupplung generiert, wodurch eine zur Generierung notwendige Rechenleistung und somit eine Erwärmung des Filters oder des Signalgenerator verringert werden kann. Aus dem gleichen Grund kann es auch vorgesehen sein, das Gegensteuersignal und das erste und zweite Ausgangssignal erst dann zu generieren, sobald die Störschwingung einen vorgegebenen ersten Grenzwert überschreitet und die Generierung des Gegensteuersignals und des ersten und zweiten Ausgangssignals einzustellen, sobald die Störschwingung einen vorgegebenen zweiten Grenzwert unterschreitet.

Nachfolgend wird die vorliegende Erfindung anhand der Zeichnungen weiter erläutert. Es zeigen:
- Fig. 1: ein Blockschaltbild eines erfindungsgemäßen Verfahrens zum Erfassen und Kompensieren von Schwingungen;
- Fig. 2: ein nur teilweise dargestelltes Blockschaltbild des Verfahrens zum Generieren eines Gegensteuersignals;
- Fig. 3: ein Blockschaltbild eines erfindungsgemäßen Verfahrens, bei welchem gegenüber dem in Fig. 1 gezeigten Verfahren kein Streckenmodell verwendet wird;
- Fig. 4: beispielhafte Signalverläufe einer Sensorvorrichtung, eines Signalgenerators und eines Filters über die Zeit.

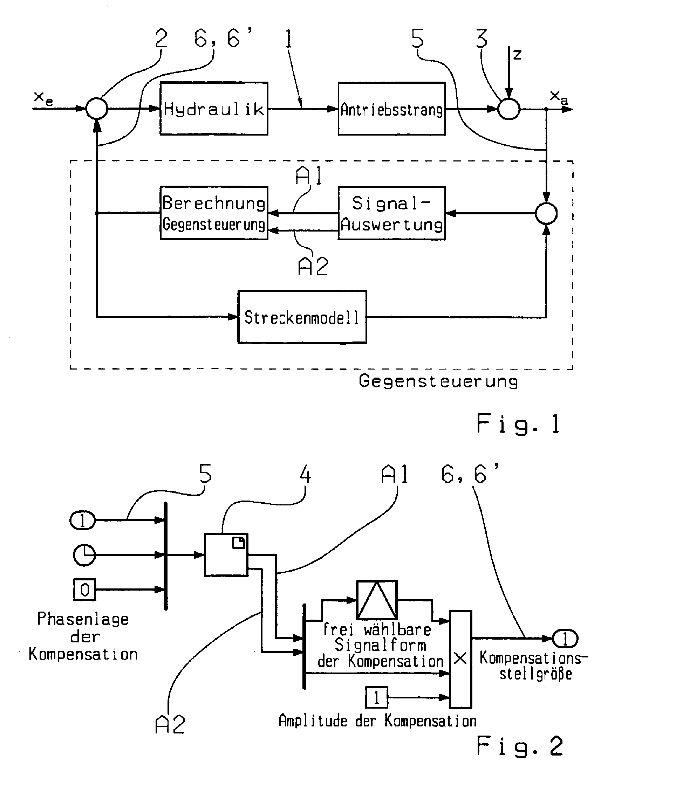

Vergleichbare oder gleiche Bauteile, Elemente oder Signale der in den Figuren 1 bis 4 dargestellten Vorrichtungen oder Verfahren sind mit gleichen Bezugszeichen versehen.

In Figur 1 ist in Form eines Blockschaltbildes eine mögliche Ausführungsvariante einer erfindungsgemäßen Vorrichtung und eines erfindungsgemäßen Verfahrens zur Rupfschwingungserkennung und -kompensation dargestellt. Der Kompensationsalgorithmus beziehungsweise die Gegensteuerung ist in dem gestrichelten Rahmen dargestellt. Oberhalb des gestrichelten Rahmens sind die Hydraulik für die Kupplungsansteuerung und der Antriebsstrang schematisch angedeutet. Die dargestellte Übertragungsstrecke 1 umfasst eine Eingangsgröße xₑ und eine Ausgangsgröße xₐ. Der dargestellte Übertragungspfad beziehungsweise die dargestellte Übertragungsstrecke 1 weist eingangsseitig eine Summationsstelle 2 und ausgangsseitig eine weitere Summationsstelle 3 auf. Die eingangsseitige Summationsstelle 2 umfasst eine Eingangsgröße xₑ zur Ansteuerung der Hydraulik und andererseits eine Kompensationsstellgröße, welche die berechnete Gegensteuerung bewirkt. Die Ausgangsgröße beziehungsweise das Sensorsignal 5, welches z.B. durch einen Drehzahlsensor erfasst wird, kann von dem Gegensteuerungsalgorithmus erfasst beziehungsweise eingelesen werden. Die Übertragungsstrecke 1 dient der schematischen Darstellung der realen hydraulischen Getriebesteuerung und des Antriebsstrangs im Fahrzeug. Die Ausgangsgröße xₑ ist hier die im Getriebe gemessene Drehzahl. Die im Blockschaltbild gezeichnete Überlagerung mit der Störschwingung z an der Summationsstelle 3 soll bedeuten, dass die Drehzahl von Rupfschwingungen überlagert ist.

Die erfindungsgemäße Vorrichtung beziehungsweise das erfindungsgemäße Verfahren umfasst einen Block "Signalauswertung", einen Block "Berechnung Gegensteuerung" und einen Block "Streckenmodell". Im Rahmen der Signalauswertung wird das erfasste Sensorsignal 5 dahingehend ausgewertet, dass die Frequenz, die Amplitude sowie die Phasenlage des Signals bestimmt werden. Aus diesen Informationen und der hinterlegten Dynamik der Übertragungsstrecke 1 wird anschließend ein entsprechendes Gegensteuersignal 6, 6' berechnet. Hierbei wird in dem Bock "Signalauswertung" ein erstes Ausgangssignal A1 und ein zweites Ausgangssignal A2 generiert, über welche wiederum das Gegensteuersignal 6, 6' besonders präzise generierbar ist. Die Dynamik der Übertragungsstrecke 1 wird durch den Amplitudengang und den Phasengang bestimmt. Das berechnete Gegensteuersignal 6, 6' beziehungsweise die Kompensationsstellgröße wird an der Summationsstelle 2 der Übertragungsstrecke 1 dem eigentlichen Ansteuersignal beziehungsweise der Eingangsgröße xₑ der Übertragungsstrecke 1 überlagert. Durch die Addition dieses Gegensteuersignals 6, 6' und des eigentlichen Stellsignals am Eingang der Hydraulik kommt es anschließend am Ausgang, also bei der Drehzahl am Antriebsstrang, zu einer destruktiven Überlagerung von Rupfschwingungen, welche in Fig. 1 durch die Störschwingung z symbolisiert sind, und Gegensteuersignal 6, 6' und somit zu einer deutlichen Reduzierung oder gar Kompensation der aufgetretenen Rupfschwingungen.

Gemäß Figur 2 ist ein detailliertes Blockschaltbild des Verfahrens beziehungsweise der Vorrichtung aus Fig. 1 dargestellt, um die Schwingungen zu erkennen und das Signal zur Kompensation, das Gegensteuersignal 6, 6' zu generieren. Hierbei handelt es sich nur um einen Teil des Blockes "Signalauswertung" und des Blockes "Berechnung Gegensteuerung" aus Fig. 1, welches aber auch als alternatives Verfahren verwendet werden kann.

Ein Detektor und Signalgenerator 4 bestimmt mit Hilfe des erfassten Sensorsignals 5 den Maximalwert und den Minimalwert einer Schwingungsperiode und stellt über die zeitliche Zuordnung die Phasenlage fest. Hieraus generiert der Signalgenerator 4 das erste und zweite Ausgangssignal A1, A2, welche zur Generierung des Gegensteuersignals 6, 6' genutzt werden. Durch den Block "Phasenlage der Kompensation", welche frei einstellbar ist, und aus der Phasenlage des Sensorsignals 5 wird der Startzeitpunkt der Kompensation bestimmt. Die frei wählbare Signalform der Kompensation kann über einen freieinstellbaren Amplitudenfraktor modifiziert werden. Um das Stellsignal einer übergeordneten Kupplungsregelung nicht zu verfälschen, sollte die frei wählbare Signalform mittelwertfrei gewählt werden. Die Form, die Amplitude und die Phase der Kompensation sind frei konfigurierbar und können gegebenenfalls auch adaptiv erstellt werden. Insbesondere können die Verzögerung und die Amplitudendämpfung des Stellsystems in Form eines Phasen- und Amplitudenganges abgelegt werden und adaptiv für die Bestimmung des Kompensationssignals, das heißt des Gegensteuersignals 6, 6' genutzt werden.

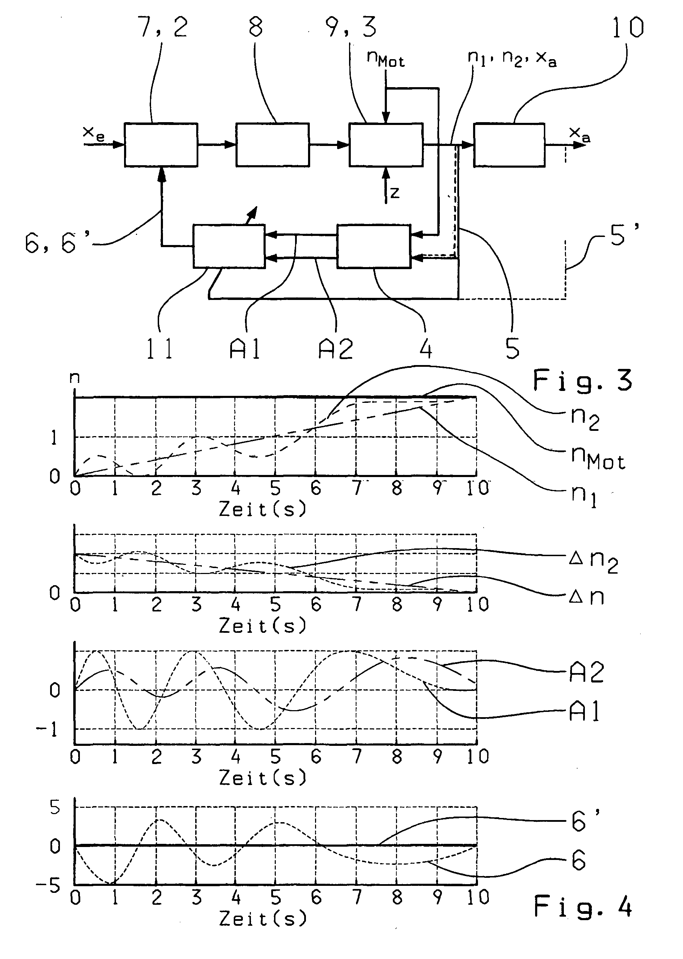

In Figur 3 ist in Form eines Blockschaltbildes eine besonders bevorzugte weitere Ausführungsvariante einer erfindungsgemäßen Vorrichtung und eines erfindungsgemäßen Verfahrens zur Erkennung und Reduzieren einer Störschwingung z dargestellt. Die Vorrichtung verfügt über eine Getriebesteuerung 7, eine hydraulische Betätigungsvorrichtung 8, eine Kupplung 9, eine nicht gezeigte Sensorvorrichtung zur Bestimmung der Eingangs- und Ausgangsdrehzahl nₘₒₜ, n₁, n₂ der Kupplung 9, einen Signalgenerator 4 und einen Filter 11. Die genannten Bauteile bilden einen Teil eines Antriebsstranges eines Fahrzeugs, insbesondere eines Personen- oder Nutzfahrzeugs.

Zur Betätigung der Kupplung 9 wird der Getriebesteuerung 7 eine Eingangsgröße xₑ vorgegeben, anhand welcher die Getriebesteuerung 7 die Kupplung 9 über die hydraulische Betätigungsvorrichtung 8 entweder im Öffnungssinne oder im Schließsinne betätigt. Bei der Betätigung der Kupplung 9, insbesondere im Schließsinne, kann auf Grund dynamischer Effekte innerhalb der Kupplung 9 eine Störschwingung z entstehen, die sich, beispielsweise in Form von Störgeräuschen, in dem Antriebsstrang negativ bemerkbar macht und die über eine Ausgangsgröße xₐ des Antriebsstranges erkennbar ist. Zur Verdeutlichung, dass die Störschwingung z in der Kupplung 9 entsteht, ist in Fig. 3 der die Störschwingung z kennzeichnende Pfeil auf die Kupplung 9 gerichtet.

Abtriebsseitig schließt sich der Kupplung 9 ein Fahrzeuggetriebe 10 an, in dem die Ausgangsdrehzahl n₁, n₂ und ein Ausgangsdrehmoment der Kupplung 9 in eine Ausgangsdrehzahl und ein Ausgangsdrehmoment des Fahrzeuggetriebes 10 übersetzt werden.

Über die nicht gezeigte Sensorvorrichtung der erfindungsgemäßen Vorrichtung kann nun eine Drehzahldifferenz zwischen der Eingangsdrehzahl n_{Mot} und der Ausgangsdrehzahl n₁, n₂ der Kupplung 9 erfasst werden. Des Weiteren kann über die Sensorvorrichtung eine Ausgangsgröße xₐ des Antriebsstranges erfasst werden, durch welche die Störschwingung z erkennbar ist. Als Ausgangsgröße xₐ des Antriebsstranges kann insbesondere die Ausgangsdrehzahl der Kupplung 9 erfasst werden, was vorteilhaft ist, da hierzu zumeist vorhandene Sensoren genutzt werden können. Alternativ dazu können über die Sensorvorrichtung andere Ausgangsgröße xₐ des Antriebsstranges ermittelt werden, über die die Störschwingung z erkennbar sind, beispielsweise eine Fahrzeuglängsbeschleunigung oder eine Drehzahl an einem Rad des Fahrzeugs. In diesem Fall verfügt die Sensorvorrichtung über eine erste Sensoreinheit mittels welcher die Drehzahldifferenz ermittelbar ist und eine zweite Sensoreinheit mittels welcher die Ausgangsgröße xₐ ermittelbar ist.

Falls die Sensorvorrichtung nun als Ausgangsgröße xₐ die Ausgangsdrehzahl der Kupplung 9 ermittelt, dient das aus der Ausgangsdrehzahl n₁, n₂ generierte Sensorsignal 5 sowohl als Eingangssignal für den Signalgenerator 4, als auch als Eingangssignal für den Filter 11, was durch die durchgezogenen Linien in Fig. 3 verdeutlicht ist. Fall jedoch die Sensorvorrichtung eine andere Ausgangsgröße xₐ des Antriebsstranges ermittelt, dient das aus dieser Größe generierte Sensorsignal 5' ausschließlich als Eingangssignal für den Filter 11 und das aus der Ausgangsdrehzahl n₁, n₂ generierte Sensorsignal 5 ausschließlich als Eingangssignal für den Signalgenerator 4, was durch die gestrichelte Linien in Fig. 3 angedeutet ist.

Der Signalgenerator 4 erfasst anhand der Sensorvorrichtung die Drehzahldifferenz zwischen der Eingangsdrehzahl und der Ausgangsdrehzahl der Kupplung 9 und generiert in deren Abhängigkeit ein periodisches erstes Ausgangssignal A1. Des Weiteren generiert der Signalgenerator 4 in Abhängigkeit der Drehzahldifferenz ein periodisches zweites Ausgangssignal A2, dessen Phasenlage jedoch gegenüber einer Phasenlage des ersten Ausgangssignal A1 verschoben ist, wobei diese Verschiebung zumindest von einem zwischen der Getriebesteuerung 7 und der Kupplung 9 auftretenden Phasenverzug und einer Frequenz des ersten Ausgangssignals A1 abhängig ist. Die Verschiebung der Phasenlagen kann sofern zweckmäßig auch von weiteren Größen des Antriebsstranges abhängig sein.

Aus dem ersten und zweiten Ausgangssignal A1, A2 generiert nun der Filter ein an das Sensorsignal 5, 5' der Ausgangsgröße xₐ adaptiertes Gegensteuersignal 6, 6', welches der Getriebesteuerung 7 zugeführt wird. Diese überlagert das Eingangssignal xₑ mit dem Gegensteuersignal 6, 6' und betätigt über die Betätigungsvorrichtung 8 dementsprechend die Kupplung 9 welche nun neben der normalen durch das Eingangssignal xₑ bewirkten Öffnungs- oder Schließbewegung eine durch das Gegensteuersignal 6, 6' bewirkte und gegen die Störschwingung z gerichtete Kompensationsbewegung macht, wodurch die Störschwingung z destruktiv überlagert wird und somit abgeschwächt oder vollständig kompensiert wird.

Die Übertragung des mit dem Gegensteuersignal 6, 6' überlagerten Eingangssignals xₑ von der Getriebesteuerung 7 auf die Betätigungsvorrichtung 8 erfolgt elektronisch, wohingegen die Übertragung des mit dem Gegensteuersignal 6, 6' überlagerten Eingangssignals xₑ von der Betätigungsvorrichtung 8 auf die Kupplung 9 in dieser Ausgestaltung der Erfindung durch einen hydraulischen Druck erfolgt. Das Gegensteuersignal 6, 6' ist in diesem Fall eine geringe Druckschwankung, die den normalen hydraulischen Druck zur Betätigung der Kupplung 9 überlagert, die Frequenz der Druckschwankung entspricht dabei der Frequenz der Störschwingung z, wobei die Phasenlage der Druckschwankung so gewählt ist, dass die Phasenlager der durch die Druckschwankung verursachten schwingenden Reaktion der Kupplung 9 um 180° gegenüber der Phasenlage der Störschwingung z gedreht ist, wodurch es zu einer destruktiven Überlagerung und Abschwächung oder Auslöschung der Störschwingung z kommt.

Bei Verwendung einer pneumatischen Betätigungsvorrichtung 8 erfolgt die Übertragung des mit dem Gegensteuersignal 6, 6' überlagerten Eingangssignals xₑ von der Betätigungsvorrichtung 8 auf die Kupplung 9 durch einen pneumatischen Druck, wobei das Gegensteuersignal 6, 6' ebenfalls als Druckschwankung dem eigentlichen Druck zur Betätigung der Kupplung 9 überlagert ist. Dagegen erfolgt bei Verwendung einer elektromechanisch ausgeführten Betätigungsvorrichtung 8 mit einem elektromechanischen Aktuator die Übertragung zwischen Betätigungsvorrichtung 8 und Kupplung 9 bevorzugt durch eine mechanische Bewegung, beispielsweise einer Schubstange, wobei das Gegensteuersignal 6, 6' eine die mechanische Bewegung überlagernde mechanischen Schwingung ist. In diesem Fall kann eine sehr schnelle Reaktion der erfindungsgemäßen Vorrichtung auf die Störschwingung z erfolgen, da eine mechanische Betätigungsvorrichtung 7 wesentlich steifer ist, als eine hydraulische oder pneumatische Betätigungsvorrichtung 7.

Da die Getriebesteuerung 7 die Eingangsgröße xₑ mit dem Gegensteuersignal 6, 6' überlagert, ist diese mit der Summationsstelle 2 aus Fig. 1 vergleichbar und zusätzlich mit dem Bezugszeichen 2 versehen. Die Kupplung 9 ist mit der Summationsstelle 3 aus Fig. 1 vergleichbar, da die Störschwingung z innerhalb der Kupplung der Eingangsgröße xₑ überlagert wird, weshalb diese zusätzlich mit dem Bezugszeichen 3 versehen ist.

In Fig. 4 sind zeitliche Verläufe der Eingangs- und Ausgangsdrehzahlen nₘₒₜ, n₁, n₂ an der Kupplung 9 (oberstes Diagramm) und zwischen den Eingangs- und Ausgangsdrehzahlen nₘₒₜ, n₁, n₂ anliegende Drehzahldifferenzen Δn₁, An₂ (zweitoberstes Diagramm), sowie Signalverläufe des von dem Signalgenerator 4 generierten ersten und zweiten Ausgangssignals A1, A2 (drittoberstes Diagramm) und Signalverläufe der von dem Filter 11 generierten Gegensteuersignale 6, 6' (unterstes Diagramm) während einer Schließbewegung der Kupplung 9 dargestellt.

Wie aus dem obersten Diagramm der Fig. 4 ersichtlich ist, bleibt die Eingangsdrehzahl nₘₒₜ der Kupplung 9 während der Schließbewegung der Kupplung 9 annähernd konstant, während sich die Ausgangsdrehzahlen n₁, n₂ im Laufe der Schließbewegung an die Eingangsdrehzahl nₘₒₜ annähern und bei t=10s der Eingangsdrehzahl nₘₒₜ entsprechen, das heißt ab t=10s ist die Kupplung 9 vollständig geschlossen. Die Schließbewegung der Kupplung 9 wird von der Getriebesteuerung 7 über die Betätigungsvorrichtung 8 auf Grundlage der Eingangsgröße xₑ gesteuert oder geregelt. Die erste Ausgangsdrehzahl n₁ zeigt hierbei einen Verlauf der Ausgangsdrehzahl der Kupplung 9 ohne einer Störschwingung z, weshalb die erste Ausgangsdrehzahl n₁ geradlinig ansteigt, wohingegen die zweite Ausgangsdrehzahl n₂ einen Verlauf der Ausgangsdrehzahl der Kupplung 9 mit einer Störschwingung z zeigt, weshalb die zweite Ausgangsdrehzahl n₂ mit der Störschwingung z überlagert schwingend ansteigt. Die Überlagerung mit der Störschwingung z bewirkt eine ungleichmäßige Schließbewegung der Kupplung 9, was sich negativ im Antriebsstrang bemerkbar machen kann, insbesondere durch starke Störgeräusche oder Beschleunigungsschwingungen.

Das zweitoberste Diagramm der Fig. 4 zeigt die Differenzdrehzahlen Δn₁, Δn₂ zwischen den Ausgangsdrehzahlen n₁, n₂ und der Eingansdrehzahl nₘₒₜ der Kupplung 9. Die erste Differenzdrehzahl Δn₁ zwischen der ersten Ausgangsdrehzahl n₁ und der Eingangsdrehzahl nₘₒₜ weist einen geraden Verlauf auf, da die erste Ausgangsdrehzahl n₁ nicht mit der Störschwingung z überlagert ist. Dagegen weist die zweite Differenzdrehzahl Δn₂ zwischen der zweiten Ausgangsdrehzahl n₂ und der Eingangsdrehzahl nₘₒₜ einen von der Störschwingung z geprägten sinusförmigen Verlauf auf. Die Störschwingung z kann auch nicht gezeigte Oberschwingungen aufweisen und einen unregelmäßigen, das heißt nicht sinusförmigen Verlauf der zweiten Ausgangsdrehzahl n₂ und der zweiten Differenzdrehzahl Δn₂ verursachen.

Die Differenzdrehzahl Δn₁, Δn₂ zwischen der Eingangsdrehzahl und der Ausgangsdrehzahl der Kupplung 9 wird von dem Signalgenerator 4 aus Fig. 2 und Fig. 3 beziehungsweise von dem Block "Signalauswertung" aus Fig. 1 dazu genutzt, um das im drittobersten Diagramm der Fig. 4 gezeigte periodische erste und zweite Ausgangssignal A1, A2 zu generieren. Hierbei sind beide Ausgangssignale A1, A2 von der Differenzdrehzahl Δn₁, Δn₂ an der Kupplung 9 abhängig, die Phasenlage des zweiten Ausgangssignals A2 ist jedoch gegenüber einer Phasenlage des ersten Ausgangssignals A1 verschoben. Die Verschiebung der Phasenlage des zweiten Ausgangssignale A2 hängt von einem Phasenverzug zwischen der Getriebesteuerung 7 und der Kupplung 9 sowie von der Frequenz des ersten Ausgangssignals A1 ab, wobei der Phasenverzug zwischen der Getriebesteuerung 7 und der Kupplung 9 ein Maß für die Zeitdauer ist, zwischen einem Aussenden eines Signals zum Öffnen oder Schließen der Kupplung 9 durch die Getriebesteuerung 7 bis zu einer ersten mechanischen Öffnungs- oder Schließbewegung der Kupplung 9.

Aus dem ersten und zweiten Ausgangssignal A1, A2 des Signalgenerators 4 beziehungsweise des Blockes "Signalauswertung" generiert der Filter 11 aus Fig. 3 beziehungsweise der Block "Berechnung Gegensteuerung" aus Fig. 1 das Gegensteuersignal 6, 6' wobei das erste Gegensteuersignal 6 das aus dem Filter 11 oder dem Block "Berechnung Gegensteuerung" ausgegebene Signal beim Auftreten einer Störschwingung z darstellt und das zweite Gegensteuersignal 6' das aus dem Filter 11 oder dem Block "Berechnung Gegensteuerung" ausgegebene Signal bei keinem Auftreten einer Störschwingung z darstellt. Als Ausgangsgröße xₐ des Antriebsstranges wird hierbei über die Ausgangsdrehzahl n₁, n₂ der Kupplung 9 die Störschwingung z von dem Filter 11 oder dem Block "Berechnung Gegensteuerung" ermittelt und der Filter beziehungsweise der Block "Berechnung Gegensteuerung" an die Störschwingung z adaptiert. Dabei generiert der an die Störschwingung z adaptierte Filter 11 oder Block "Berechnung Gegensteuerung" das Gegensteuersignal 6, 6' aus dem ersten und zweiten Ausgangssignal A1, A2.

Da in der ersten Ausgangsdrehzahl n₁ keine Störschwingung z feststellbar ist und somit auch keine Abschwächung oder Kompensation der Störschwingung z notwendig ist, weist das durch den Filter 11 oder den Block "Berechnung Gegensteuerung" generierte und an die Getriebesteuerung 7 beziehungsweise an die Summationsstelle 2 ausgegebene zweite Gegensteuersignal 6' annähernd den Wert 0 auf.

Demgegenüber ist die zweite Ausgangsdrehzahl n₂ mit der Störschwingung z überlagert, weshalb das durch den Filter 11 oder den Block "Berechnung Gegensteuerung" generierte und an die Getriebesteuerung 7 beziehungsweise die Summationsstelle 2 ausgegebene erste Gegensteuersignal 6 einen sinusförmigen Verlauf aufweist, wobei dessen Frequenz, Phasenlage und Amplitude so gewählt sind, dass die mit dem ersten Gegensteuersignal 6 überlagerte Eingangsgröße xₑ in der Kupplung 9 die Störschwingung z kompensiert oder zumindest stark abschwächt.

Wie aus dem zeitlichen Verlauf der zweiten Ausgangsdrehzahl n₂ oder der zweiten Differenzdrehzahl Δn₂ im obersten beziehungsweise zweitobersten Diagramm der Fig. 4 ersichtlich ist, nimmt die Frequenz des ersten und zweiten Ausgangssignals A1, A2 und des Gegensteuersignals 6 im Laufe der Zeit ab, was eine Folge der geringer werdenden Drehzahldifferenz Δn₁, Δn₂ ist. Nicht dargestellt ist in Fig. 4 die Auswirkung des ersten Gegensteuersignals 6 auf die mit der Störschwingung z überlagerte zweite Ausgangsdrehzahl n₂. Hierbei würde sich die mit der Störschwingung z überlagerte zweite Ausgangsdrehzahl n₂ kurz nach Beginn der Schließbewegung der Kupplung 9 der nicht mit der Störschwingung z überlagerten ersten Ausgangsdrehzahl n₁ angleichen, wodurch die Störschwingung z nicht weitere spür- oder hörbar wäre.

Falls statt einer Kupplung eine Bremse verwendet wird, wird statt der Ausgangsdrehzahl n₁, n₂ die Eingangsdrehzahl der Bremse zur Generierung des ersten und zweiten Ausgangssignals A1, A2 und des Gegensteuersignals 6, 6' verwendet. Die Differenzdrehzahl Δn₁, Δn₂ der Bremse entspricht dann deren Eingangsdrehzahl, da ein drehendes Eingangselement der Bremse immer gegen ein stehendes Ausgangselement abgebremst wird und eine Ausgangsdrehzahl der Bremse somit immer null ist. Die Ausgangsgröße xₐ wird dann bevorzugt auch über die Eingangsdrehzahl der Bremse ermittelt.

Die Bremse oder Kupplung 9 der erfindungsgemäßen Vorrichtung oder des Verfahrens kann insbesondere eine Anfahrkupplung oder eine Anfahrbremse eines automatischen Getriebes oder eines automatisierten Schaltgetriebes, beispielsweise eines automatisierten Doppelkupplungsgetriebes, eines Personen- oder Nutzfahrzeugs sein.

### Bezugszeichen

- 1: Übertragungsstrecke
- 2: eingangsseitige Summationsstelle
- 3: ausgangsseitige Summationsstelle
- 4: Detektor/Signalgenerator
- 5, 5': Sensorsignal
- 6, 6': Gegensteuersignal
- 7: Getriebesteuerung
- 8: Betätigungsvorrichtung
- 9: Kupplung
- 10: Getriebe
- 11: adaptiver Filter

- A1: erstes Ausgangssignal
- A2: zweites Ausgangssignal
- n_{Mot}: Eingangsdrehzahl
- n₁: erste Ausgangsdrehzahl
- n₂: zweite Ausgangsdrehzahl
- Δn₁: erste Differenzdrehzahl
- Δn₂: zweite Differenzdrehzahl
- xₑ: Eingangsgröße
- xₐ: Ausgangsgröße
- z: Störschwingung

## Patentansprüche

1. Vorrichtung, welche eine Störschwingung (z), insbesondere eine Rupfschwingung, an einer Bremse oder Kupplung (9) eines Antriebsstranges eines Fahrzeuges erkennt und reduziert, zumindest bestehend aus
- einer Betätigungsvorrichtung (8), welche die Bremse oder Kupplung (9) betätigt,
- einer Sensorvorrichtung, welche eine Ausgangsgröße (xₐ) des Antriebsstranges, durch welche die Störschwingung (z) erkannt wird, erfasst,
- einem Mittel (11), welches ein Gegensteuersignal (6, 6') zur Reduzierung der Störschwingung (z) generiert,
- einer mit dem Mittel (11) verbundenen Getriebesteuerung (7), welche die Betätigungsvorrichtung (8) regelt oder steuert, wobei mittels der Getriebesteuerung (7) eine Eingangsgröße (xₑ) des Antriebsstranges für die Betätigung der Bremse oder Kupplung (9) mit dem Gegensteuersignal (6, 6') überlagert wird, wodurch die Störschwingung (z) reduziert wird,
**dadurch gekennzeichnet, dass**
- das Mittel (11) ein an die Ausgangsgröße (xₐ) des Antriebsstranges adaptierter Filter ist,
- die Sensorvorrichtung neben der Ausgangsgröße (xₐ) des Antriebsstranges eine Drehzahldifferenz (Δn₁, Δn₂) zwischen einer Eingangs- und Ausgangsdrehzahl (n₁, n₂, nₘₒₜ) der Bremse oder Kupplung (9) erfasst,
- die Vorrichtung einen Signalgenerator (4) umfasst, der mit der Sensorvorrichtung und dem Filter (11) verbunden ist, wobei mittels des Signalgenerators (4)
• ein periodisches erstes Ausgangssignal (A1) generiert wird; welches von der Drehzahldifferenz (Δn₁, Δn₂) zwischen der Eingangs- und Ausgangsdrehzahl (n₁, n₂, nₘₒₜ) der Bremse oder Kupplung (9) abhängig ist und
• ein periodisches zweites Ausgangssignal (A2) generiert wird, welches von der Drehzahidififerenz (Δn₁, Δn₂) zwischen der Eingangs- und Ausgangsdrehzahl (n₁, n₂, nₘₒₜ) der Bremse oder Kupplung (9) abhängig ist und welches gegenüber dem ersten Ausgangssignal (A1) phasenverschoben ist,
wobei durch den Filter (11) zumindest mittels des ersten und zweiten Ausgangssignals (A1, A2) und mittels der Ausgangsgröße (xₐ) das Gegensteuersignal (6, 6') generiert wird.

2. Vorrichtung nach Anspruch 1, **dadurch gekennzeichnet, dass** die Sensorvorrichtung aus zumindest einer ersten Sensoreinheit und einer zweiten Sensoreinheit besteht, wobei über die erste Sensoreinheit die Drehzahldiffierenz (Δn₁, Δn₂) zwischen der Eingangs- und Ausgangsdrehzahl (n₁, n₂, nₘₒₜ) der Bremse oder Kupplung (9) ermittelt wird und über die zweite Sensoreinheit die Ausgangsgröße (xₐ) des Antriebsstranges ermittelt wird.

3. Vorrichtung nach Anspruch 1, **dadurch gekennzeichnet, dass** der adaptive Filter (11) ein adaptiver Notch-Filter ist, der insbesondere über einen Least-Mean-Square-Algorithmus oder einen Recursive-Least-Square-Algorithmus zur Adaption des Filters (11) an die Ausgangsgröße (xₐ) verfügt.

4. Verfahren durch welches eine Störschwingung (z), insbesondere einer Rupfschwingung, an einer Bremse oder Kupplung (9) eines Antriebsstranges eines Fahrzeuges mit einer Vorrichtung nach Anspruch 1 oder 2 oder 3 erkannt und reduziert wird, bei dem
- ein Signalgenerator (4)
• über eine Sensorvorrichtung eine Drehzahldifferenz (Δn₁, Δn₂) zwischen einer Eingangs- und Ausgangsdrehzahl (n₁, n₂, nₘₒₜ) der Bremse oder Kupplung (9) erfasst und
• ein periodisches erstes Ausgangssignal (A1) generiert, welches von der Drehzahldifferenz (Δn₁, Δn₂) zwischen der Eingangs- und Ausgangsdrehzahl (n₁, n₂, nₘₒₜ) der Bremse oder Kupplung (9) abhängig ist und
• ein periodisches zweites Ausgangssignal (A2) generiert, welches von der Drehzahldifferenz (Δn₁, Δn₂) zwischen der Eingangs- und Ausgangsdrehzahl (n₁, n₂, nₘₒₜ) der Bremse oder Kupplung (3) abhängig ist und welches gegenüber dem ersten Ausgangssignal (A1) phasenverschoben ist, wobei
- über die Sensorvorrichtung ein von einer Ausgangsgröße (xₐ) des Antriebsstranges abhängiges Sensorsignal (5, 5') ermittelt wird,
- ein an die Ausgangsgröße (xₐ) adaptierbarer Filter (11) aus dem ersten und zweiten Ausgangssignal (A1, A2) und dem Sensorsignal (5, 5') ein Gegensteuersignal (6, 6') generiert und
- eine Getriebesteuerung zur Regelung oder Steuerung einer Betätigungsvorrichtung (8) der Bremse oder Kupplung (9) eine Eingangsgröße (xₑ) des Antriebsstranges mit dem Gegensteuersignal (6, 6') überlagert.

5. Verfahren nach Anspruch 4, **dadurch gekennzeichnet, dass** der Signalgenerator (4) das zweite Ausgangssignal (A2) derart generiert, dass eine Phasenlage des zweiten Ausgangssignals (A2) in Abhängigkeit eines zwischen der Getriebesteuerung (7) und der Bremse oder der Kupplung (9) auftretenden Phasenverzugs und in Abhängigkeit einer Frequenz des ersten Ausgangssignals (A1) gegenüber der Phasenlage des ersten Ausgangssignals (A1) verschoben ist.

6. Verfahren nach Anspruch 5, **dadurch gekennzeichnet, dass** der zwischen der Getriebesteuerung (7) und der Bremse oder Kupplung (9) auftretende Phasenverzug bei einer Fahrzeuginbetriebnahme ermittelt und in dem Fahrzeug, insbesondere dem Signalgenerator (4), hinterlegt wird, wobei der Signalgenerator (4) das zweite Ausgangssignal (A2) in Abhängigkeit des hinterlegten Phasenverzugs und in Abhängigkeit der Frequenz des ersten Ausgangssignals (A1) generiert.

7. Verfahren nach Anspruch 4, **dadurch gekennzeichnet, dass** bei der Auswertung des erfassten Sensorsignals (5, 5') die Frequenz und die Amplitude der Störschwingung (z) bestimmt werden.

8. Verfahren nach einem der Ansprüche 4 bis 7, **dadurch gekennzeichnet, dass** das Gegensteuersignal (6, 6') als Eingang für ein mathematisches Streckenmodell der Übertragungsstrecke (1) verwendet wird.

9. Verfahren nach Anspruch 8, **dadurch gekennzeichnet, dass** das Antwortsignal des Streckenmodells über einen Kalmann-Filter mit dem Sensorsignal (5, 5') abgeglichen wird.

10. Verfahren nach einem der Ansprüche 4 bis 9, **dadurch gekennzeichnet, dass** das Gegensteuersignal (6, 6') und das erste und zweite Ausgangssignal (A1, A2) erst dann generiert werden, sobald die Störschwingung (z) einen vorgegebenen ersten Grenzwert überschreitet und die Generierung des Gegensteuersignals (6, 6') und des ersten und zweiten Ausgangssignals (A1, A2) endet, sobald die Störschwingung (z) einen vorgegebenen zweiten Grenzwert unterschreitet.

## Claims

1. Device which detects and reduces a disturbing vibration (z), in particular a juddering vibration, at a brake or clutch (9) of a drive train of a vehicle, composed at least of
- an activation device (8) which activates the brake or clutch (9),
- a sensor device which senses an output variable (xₐ) of the drive train by which the disturbing vibration (z) is detected,
- a means (11) which generates a counter-control signal (6, 6') for reducing the disturbing vibration (z),
- a transmission controller (7) which is connected to the means (11) and which performs closed-loop or open-loop control of the activation device (8), wherein an input variable (xₑ) of the drive train for activating the brake or clutch (9) has the counter-control signal (6, 6') superimposed on it by means of the transmission controller (7), as a result of which the disturbing vibration (z) is reduced,
**characterized in that**
- the means (11) is a filter which is adapted to the output variable (xₐ) of the drive train,
- the sensor device senses, in addition to the output variable (xₐ) of the drive train, a rotational speed difference (Δn₁, Δn₂) between an input and an output rotational speed (n₁, n₂, nₘₒₜ) of the brake or clutch (9),
- the device comprises a signal generator (4) which is connected to the sensor device and the filter (11), wherein the signal generator (4)
• generates a periodic first output signal (A1) which is dependent on the rotational speed difference (Δn₁, Δn₂) between the input and output rotational speeds (n₁, n₂, nₘₒₜ) of the brake or clutch (9), and
• generates a periodic second output signal (A2) which is dependent on the rotational speed difference (Δn₁, Δn₂) between the input and output rotational speeds (n₁, n₂, nₘₒₜ) of the brake or clutch (9) and which is phase-shifted with respect to the first output signal (A1),
wherein the counter-control signal (6, 6') is generated by the filter (11), at least by means of the first and second output signals (A1, A2) and by means of the output variable (xₐ).

2. Device according to Claim 1, **characterized in that** the sensor device is composed of at least a first sensor unit and a second sensor unit, wherein the rotational speed difference (Δn₁, Δn₂) between the input and output rotational speeds (n₁, n₂, nₘₒₜ) of the brake or clutch (9) is determined by means of the first sensor unit, and the output variable (xₐ) of the drive train is determined by means of the second sensor unit.

3. Device according to Claim 1, **characterized in that** the adaptive filter (II) is an adaptive notch filter which has, in particular, a least mean square algorithm or a recursive least square algorithm for adapting the filter (11) to the output variable (xₐ).

4. Method by which a disturbing vibration (z), in particular a juddering vibration, at a brake or clutch (9) of a drive train of a vehicle is detected and reduced with a device according to Claim 1 or 2 or 3, in which
- a signal generator (4)
• senses a rotational speed difference (Δn₁, Δn₂) between an input and output rotational speed (n₁, n₂, nₘₒₜ) of the brake or clutch (9) by means of a sensor device, and
• generates a periodic first output signal (A1) which is dependent on the rotational speed difference (Δn₁, Δn₂) between the input and output rotational speeds (n₁, n₂, nₘₒₜ) of the brake or clutch (9), and
• generates a periodic second output signal (A2) which is dependent on the rotational speed difference (Δn₁, Δn₂) between the input and output rotational speeds (n₁, n₂, nₘₒₜ) of the brake or clutch (3) and which is phase-shifted with respect to the first output signal (A1), wherein
- a sensor signal (5, 5') which is dependent on an output variable (xₐ) of the drive train is determined by means of the sensor device,
- a filter (11) which can be adapted to the output variable (xₐ) generates a counter-control signal (6, 6') from the first and second output signals (A1, A2) and the sensor signal (5, 5'), and
- a transmission controller for performing closed-loop or open-loop control of an activation device (8) of the brake or clutch (9) superimposes the counter-control signal (6, 6') on an input variable (xₑ) of the drive train.

5. Method according to Claim 4, **characterized in that** the signal generator (4) generates the second output signal (A2) in such a way that a phase angle of the second output signal (A2) is shifted as a function of a phase shift occurring between the transmission controller (7) and the brake or the clutch (9) and as a function of a frequency of the first output signal (A1) with respect to the phase angle of the first output signal (A1).

6. Method according to Claim 5, **characterized in that** the phase shift occurring between the transmission controller (7) and the brake or clutch (9) is determined when the vehicle is being started up and is stored in the vehicle, in particular the signal generator (4), wherein the signal generator (4) generates the second output signal (A2) as a function of the stored phase shift and as a function of the frequency of the first output signal (A1).

7. Method according to Claim 4, **characterized in that** during the evaluation of the sensed sensor signal (5, 5') the frequency and the amplitude of the disturbing vibration (z) are determined.

8. Method according to one of Claims 4 to 7, **characterized in that** the counter-control signal (6, 6') is used as an input for a mathematical system model of the transmission link (1).

9. Method according to Claim 8, **characterized in that** the response signal of the system model is reconciled with the sensor signal (5, 5') by means of a Kalmann filter.

10. Method according to one of Claims 4 to 9, **characterized in that** the counter-control signal (6, 6') and the first and second output signals (A1, A2) are only generated once the disturbing vibration (z) exceeds a predefined first limiting value, and the generation of the counter-control signal (6, 6') and of the first and second output signals (A1, A2) ends as soon as the disturbing vibration (z) undershoots a predefined second limiting value.

## Revendications

1. Ensemble qui détecte et réduit des vibrations perturbatrices (z), en particulier des vibrations de broutement sur un frein ou l'accouplement (9) du train d'entraînement d'un véhicule, l'ensemble étant constitué d'au moins :
un ensemble d'actionnement (8) qui actionne le frein ou l'accouplement (9),
un ensemble de capteur qui saisit une grandeur de sortie (xₐ) du train d'entraînement, grandeur par laquelle l'oscillation perturbatrice (z) est détectée,
un moyen (11) qui génère un signal opposé de commande (6, 6') qui réduit les vibrations perturbatrices (z),
une commande de transmission (7) raccordée au moyen (11) et qui régule ou commande l'ensemble d'actionnement (8),
une grandeur d'entrée (xₑ) du train d'entraînement, qui sert à actionner le frein d'accouplement (9), étant superposée sur le signal opposé de commande (6, 6') au moyen de la commande de transmission (7), ce qui réduit les vibrations perturbatrices (z),
**caractérisé en ce que**
le moyen (11) est un filtre adapté à la grandeur de sortie (xₐ) du train d'entraînement,
l'ensemble de capteur saisit en plus de la grandeur de sortie (xₐ) du train d'entraînement une différence (Δn₁, Δn₂) entre la vitesse de rotation d'entrée et la vitesse de rotation de sortie (n₁, n₂, nₘₒₜ) du frein ou de l'accouplement (9),
**en ce que** l'ensemble comporte un générateur (4) de signaux raccordé à l'ensemble de capteur et au filtre (11),
**en ce que** le générateur (4) de signaux produit un premier signal périodique de sortie (A1) qui dépend de la différence (Δn₁, Δn₂) entre la vitesse de rotation d'entrée et la vitesse de rotation de sortie (n₁, n₂, nₘₒₜ) du frein ou de l'accouplement (9) et un deuxième signal périodique de sortie (A2) qui dépend de la différence (Δn₁, Δn₂) entre la vitesse de rotation d'entrée et la vitesse de rotation de sortie (n₁, n₂, nₘₒₜ) du frein ou de l'accouplement (9) et déphasé par rapport au premier signal de sortie (A1) et
**en ce que** le signal opposé de commande (6n 6') est produit par le filtre (11) au moins à partir du premier et du deuxième signal de sortie (A1, A2) et au moyen de la grandeur de sortie (xₐ).

2. Ensemble selon la revendication 1, **caractérisé en ce que** l'ensemble de capteur est constitué d'au moins une première unité de capteur et une deuxième unité de capteur, la différence (Δn₁, Δn₂) entre la vitesse de rotation d'entrée et la vitesse de rotation de sortie (n₁, n₂, nₘₒₜ) du frein ou de l'accouplement (9) étant déterminée par la première unité de capteur et la grandeur de sortie (xₐ) du train d'entraînement étant déterminée par la deuxième unité de capteur.

3. Ensemble selon la revendication 1, **caractérisé en ce que** le filtre adaptatif (11) est un filtre adaptatif dit "à entaille" qui dispose en particulier d'un algorithme à moindres carrés moyens ou d'un algorithme récursif à moindres carrés pour l'adaptation du filtre (11) à la grandeur de sortie (xₐ)

4. Procédé permettant de détecter et de réduire les vibrations perturbatrices (z), en particulier des vibrations de broutement, sur un frein ou l'accouplement (9) du train d'entraînement d'un véhicule à l'aide d'un dispositif selon les revendications 1, 2 ou 3, et dans lequel
par l'intermédiaire d'un ensemble de capteur, un générateur (4) de signaux
- saisit la différence (Δn₁, Δn₂) entre la vitesse de rotation d'entrée et la vitesse de rotation de sortie (n₁, n₂, nₘₒₜ) du frein ou de l'accouplement (9) et
- produit un premier signal périodique de sortie (A1) qui dépend de la différence (Δn₁, Δn₂) entre la vitesse de rotation d'entrée et la vitesse de rotation de sortie (n₁, n₂, nₘₒₜ) du frein ou de l'accouplement (9) et
- produit un deuxième signal périodique de sortie (A2) qui dépend de la différence (Δn₁, Δn₂) entre la vitesse de rotation d'entrée et la vitesse de rotation de sortie (n₁, n₂, nₘₒₜ) du frein et de l'accouplement (3) et déphasé par rapport au premier signal de sortie (A1),
un signal (5, 5') de capteur qui dépend d'une grandeur d'entrée (xₐ) du train d'entraînement étant déterminé par l'intermédiaire de l'ensemble de capteur,
un filtre (11) apte à être adapté à la grandeur de sortie (xa) produisant un signal opposé de commande (6, 6') à partir du premier et du deuxième signal de sortie (A1, A2) et du signal (5, 5') de capteur et
une commande de transmission superposant une grandeur d'entrée (xₑ) du train d'entraînement au signal opposé de commande (6, 6') pour réguler ou commander un ensemble d'actionnement (8) du frein ou de l'accouplement (9).

5. Procédé selon la revendication 4, **caractérisé en ce que** le générateur (4) de signaux produit le deuxième signal de sortie (A2) en décalant par rapport à la phase du premier signal de sortie (A1) la phase du deuxième signal de sortie (A2) en fonction du déphasage qui s'établit entre la commande de transmission (7) et le frein ou l'accouplement (9) et en fonction de la fréquence du premier signal de sortie (A1).

6. Procédé selon la revendication 5, **caractérisé en ce que** le déphasage qui s'établit entre la commande de transmission (7) et le frein ou l'accouplement (9) est déterminé à la mise en service du véhicule et est conservé en mémoire dans le véhicule, en particulier dans le générateur (4) de signaux, le générateur (4) de signaux produisant le deuxième signal de sortie (A2) en fonction du déphasage conservé en mémoire et en fonction de la fréquence du premier signal de sortie (A1).

7. Procédé selon la revendication 4, **caractérisé en ce que** la fréquence et l'amplitude des vibrations perturbatrices (z) sont déterminées lors de l'évaluation du signal (5, 5') de capteur qui a été saisi.

8. Procédé selon l'une des revendications 4 à 7, **caractérisé en ce que** le signal opposé de commande (6, 6') est utilisé comme entrée pour un modèle mathématique de la chaîne de transmission (1).

9. Procédé selon la revendication 8, **caractérisé en ce que** le signal de réponse du modèle de la chaîne de transmission est lissé par le signal (5, 5') de capteur par l'intermédiaire d'un filtre de Kalmann.

10. Procédé selon l'une des revendications 4 à 9, **caractérisé en ce que** le signal opposé de commande (6, 6'), le premier et le deuxième signal de sortie (A1, A2) ne sont produits qu'après que les vibrations perturbatrices (z) ont dépassé une première valeur limite prédéterminée et **en ce que** la production du signal opposé de commande (6, 6'), du premier et du deuxième signal de sortie (A1, A2) se termine dès que les perturbations parasites (z) n'atteignent plus une deuxième valeur limite prédéterminée.
